# EUROPEAN PATENT APPLICATION

(11) **EP 4 707 647 A1**
(43) Date of publication of application: **11.03.2026**
(21) Application number: 25197609.8
(22) Date of filing: 22.08.2025
(51) Int. Cl.: F16K 11/085, B60K 11/02, F16K 11/22, F16K 27/00, F16K 27/06, F16K 24/02

(54) **SWITCHING DEVICE**

(30) Priority: 02.09.2024 JP 2024150553
(71) Applicant: TOYOTA JIDOSHA KABUSHIKI KAISHA, Toyota-shi, Aichi-ken 471-8571 (JP)
(72) Inventor: MORIYAMA, Shuji, TOYOTA-SHI, AICHI-KEN, 471-8571 (JP); OHGATA, Yusuke, TOYOTA-SHI, AICHI-KEN, 471-8571 (JP); TANIGUCHI, Motoki, TOYOTA-SHI, AICHI-KEN, 471-8571 (JP)
(74) Representative: Cabinet Beau de Loménie

(57) **Abstract**

ABSTRACT OF THE DISCLOSURE

A switching device (100) includes a spool valve (40) that switches flow channels of a heat medium, a case (20) that accommodates the spool valve (40), and an air vent valve (30). The case (20) has spaces (S1 to S3) in each of which the spool valve (40) is accommodated, and spaces (S4 to S6) communicating with the spaces (S 1 to S3). The air vent valve (30) is inserted into each of the spaces (S4 to S6).

## Description

### CROSS REFERENCE TO RELATED APPLICATIONS

This nonprovisional application is based on Japanese Patent Application No. 2024-150553 filed on September 2, 2024 with the Japan Patent Office, the entire contents of which are hereby incorporated by reference and to which the person of the art can refer when considering the present disclosure.

### BACKGROUND

### Field

The present disclosure relates to a switching device.

### Description of the Background Art

Japanese Patent Laying-Open No. 2021-156234 discloses a thermal circuit in which a heat medium circulates. The thermal circuit is provided with a switching valve that switches flow channels of the heat medium.

### SUMMARY

Although not described in Japanese Patent Laying-Open No. 2021-156234, it is conceivable to provide an air vent valve on a circuit connected to a switching device in order to vent air accumulated in a heat medium. In this case, a component such as a connector for connecting an air vent valve on the circuit is required, which may increase the number of components of the circuit and complicate the configuration of the circuit.

The present disclosure has been made to solve the aforementioned problem, and an object thereof is to provide a switching device that can simplify the configuration of a circuit connected to the switching device.

A switching device according to one aspect of the present disclosure includes a switching valve that switches flow channels of a heat medium, a case that accommodates the switching valve, and an air vent valve. The case has a first space and a second space formed therein, the switching valve being accommodated in the first space, the second space communicating with the first space. The air vent valve is inserted into the second space.

The foregoing and other objects, features, aspects, and advantages of the present disclosure will become more apparent from the following detailed description of the present disclosure when taken in conjunction with the accompanying drawings.

### BRIEF DESCRIPTION OF THE DRAWINGS

Fig. 1 is a perspective view showing a configuration of a switching device according to an embodiment.
Fig. 2 is a perspective view showing an actuator and spool valves of the switching device according to the embodiment.
Fig. 3 is a front view showing a configuration of a body of a case of the switching device according to the embodiment.
Fig. 4 is a front view showing a configuration of a cover of the case of the switching device according to the embodiment.
Fig. 5 is a cross sectional view taken along a line V-V in Fig. 3.
Fig. 6 is a cross sectional view taken along a line VI-VI in Fig. 3.
Fig. 7 is a cross sectional view taken along a line VII-VII in Fig. 3.

### DESCRIPTION OF THE PREFERRED EMBODIMENTS

An embodiment of the present disclosure will be described with reference to the drawings. It should be noted that, in the drawings referred to below, the same or corresponding members will be designated by the same reference numerals.

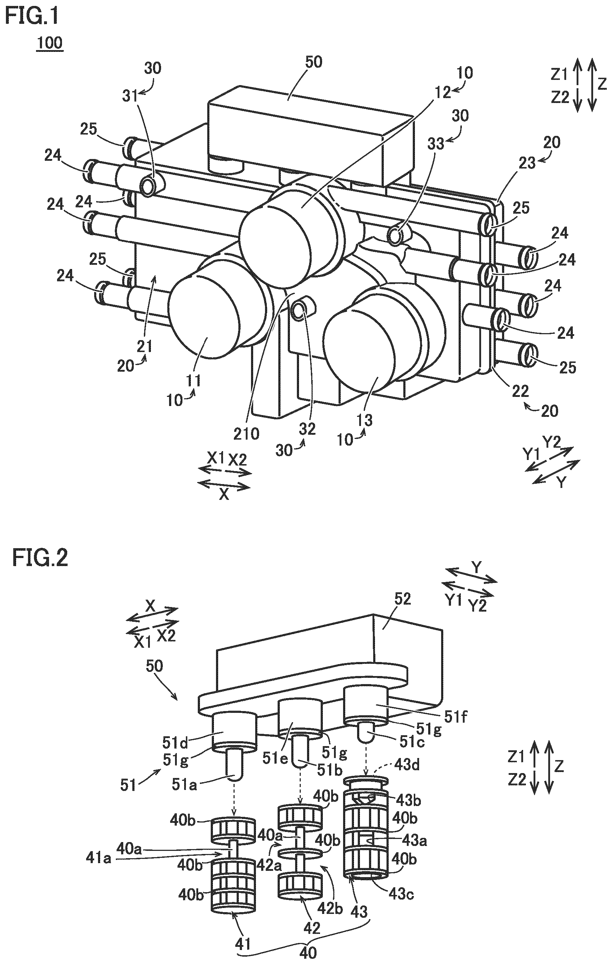

Fig. 1 is a perspective view of a switching device 100 according to the present embodiment. It should be noted that, in the present specification, a Z direction is an up-down direction. Specifically, a Z1 direction is an up direction, and a Z2 direction is a down direction. Further, each of an X direction and a Y direction is a direction orthogonal to the Z direction. The X direction and the Y direction are orthogonal to each other in a plane orthogonal to the Z direction. It should be noted that the Z direction is an example of the "up-down direction" in the present disclosure.

Switching device 100 is connected to a circuit (not shown). In the above circuit, a heat medium (such as water) that transmits and receives heat may circulate. The circuit may be a thermal management circuit for controlling temperature of a battery for a vehicle, for example. It should be noted that the application of switching device 100 is not limited to that for a vehicle.

Switching device 100 includes at least one water pump 10, a case 20, at least one air vent valve 30, at least one spool valve 40 (Fig. 2), and an actuator 50. In the present embodiment, switching device 100 includes three water pumps 10, three air vent valves 30, and three spool valves 40. It should be noted that the number of each of water pump 10, air vent valve 30, and spool valve 40 is not limited to three. It should be noted that spool valve 40 is an example of the "switching valve" in the present disclosure.

It should be noted that each air vent valve 30 is provided to vent air accumulated in a flow path when water is injected into the thermal management circuit. For example, water injection may be performed from a reservoir tank (not shown) provided to the thermal management circuit. It should be noted that, during water injection, each water pump 10 may not be driven, or one or more water pumps 10 may be driven.

Each of a plurality of water pumps 10 circulates the heat medium in the thermal management circuit. The plurality of water pumps 10 include a water pump 11, a water pump 12, and a water pump 13. As shown in Fig. 1, each water pump 10 may be formed in a columnar shape (a cylindrical shape in Fig. 1). Water pump 11, water pump 12, and water pump 13 are respectively provided to circulate the heat medium to circuits disposed in the thermal management circuit.

The plurality of water pumps 10 and a plurality of spool valves 40 are disposed in case 20. In other words, the plurality of water pumps 10 and the plurality of spool valves 40 are disposed in common case 20. It should be noted that case 20 may be made of resin.

Case 20 includes a body 21, a gasket 22, and a cover 23. Body 21, gasket 22, and cover 23 are arranged in the Y direction. An end portion (a peripheral edge portion) on a Y2 side of body 21 is connected to an end portion (a peripheral edge portion) on a Y1 side of cover 23.

Gasket 22 is disposed between body 21 and cover 23, and seals a gap between body 21 and cover 23. Body 21 is disposed on the Y1 side of gasket 22. Cover 23 is disposed on the Y2 side of gasket 22.

Case 20 (body 21) includes a side surface 210 in the Y direction. Side surface 210 is a side surface on the Y1 side of body 21. Each of water pumps 11, 12, and 13 is provided on side surface 210. That is, each of water pumps 11, 12, and 13 is attached to case 20 from the same direction (the Y1 side). It should be noted that side surface 210 is an example of the "second surface" in the present disclosure.

Case 20 includes inlet ports 24 and outlet ports 25. Inlet port 24 causes the heat medium to flow into case 20. Outlet port 25 causes the heat medium to flow out of case 20. Each of inlet port 24 and outlet port 25 is provided to each of body 21 and cover 23. Each of inlet port 24 and outlet port 25 extends in the X direction. It should be noted that each of inlet port 24 and outlet port 25 is an example of the "port" in the present disclosure.

Air vent valves 30 include air vent valves 31, 32, and 33. Each of air vent valves 31, 32, and 33 penetrates side surface 210 of body 21 and is inserted into case 20. It should be noted that air vent valve 31 is an example of the "second air vent valve" and the "merging space valve" in the present disclosure. Further, air vent valve 32 is an example of the "first air vent valve" and the "merging space valve" in the present disclosure. Further, air vent valve 33 is an example of the "first air vent valve" and the "restriction space valve" in the present disclosure.

Fig. 2 is a perspective view showing the plurality of spool valves 40 and actuator 50.

Each of the plurality of spool valves 40 switches flow channels of the heat medium. The plurality of spool valves 40 include a spool valve 41, a spool valve 42, and a spool valve 43. Each of spool valves 41, 42, and 43 is accommodated in case 20. In the following, the description "spool valve 40" corresponds to each of spool valves 41, 42, and 43. It should be noted that spool valve 41 is an example of the "switching valve" in the present disclosure. Further, spool valve 42 is an example of the "switching valve" and the "second switching valve" in the present disclosure. Further, spool valve 43 is an example of the "switching valve" and the "first switching valve" in the present disclosure.

Each spool valve 40 is formed in a substantially cylindrical shape. Spool valve 43 is formed in a hollow shape. Each of spool valves 41 and 42 does not have a hollow shape. Spool valve 43 may be connected to a high temperature circuit which includes a heater or the like and in which a relatively high temperature heat medium circulates, of the thermal management circuit described above.

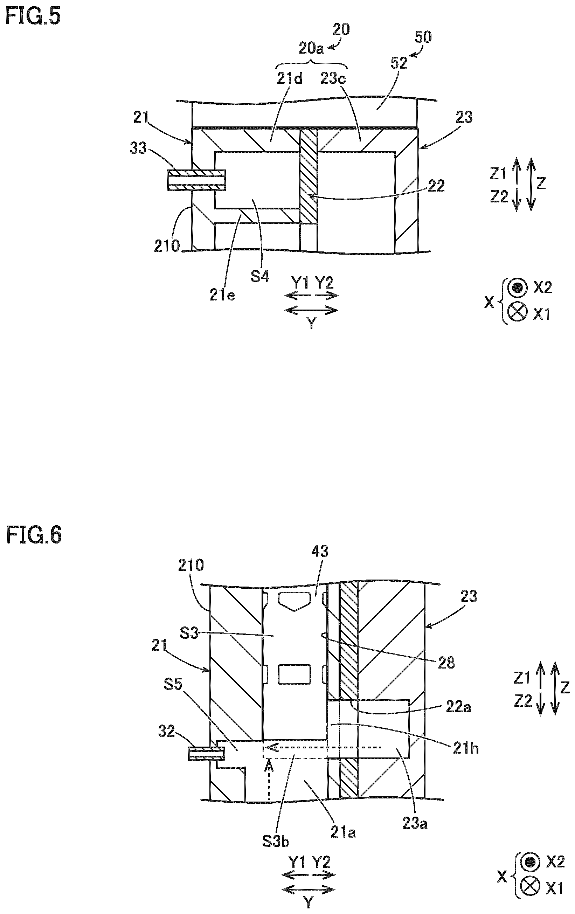

Each spool valve 40 is configured to be movable in an axial direction (the Z direction). When the position of each spool valve 40 in the axial direction changes, the state of connection between an opening, a gap, and the like formed in each spool valve 40 and a heat medium flow path (for example, a flow path 23a (Fig. 6) described later) within case 20 is switched. For example, a gap 41a at which a shaft portion 40a of spool valve 40 is exposed is formed in spool valve 41. A gap 42a and a gap 42b at which shaft portion 40a is exposed are formed in spool valve 42. The positions of gap 42a and gap 42b in the Z direction are different from each other. An opening 43a and an opening 43b are formed in an outer peripheral surface of spool valve 43. The positions of opening 43a and opening 43b in the Z direction are different from each other. When the position of each of gaps 41a, 42a, and 42b and openings 43a and 43b in the Z direction changes, the state of flow of the heat medium in each spool valve 40 changes.

It should be noted that an opening 43d and an opening 43c are respectively formed at an end portion on a Z1 side and an end portion on a Z2 side of spool valve 43.

Each of the plurality of spool valves 40 is provided inside case 20 (body 21). Each of the plurality of spool valves 40 extends in the Z direction. The axial directions of spool valves 40 are parallel to each other.

The plurality of spool valves 40 are disposed with a spacing therebetween in the X direction. That is, the plurality of spool valves 40 are arranged in the X direction.

Each of spool valves 41 to 43 is provided with a plurality of spool seals 40b. The plurality of spool seals 40b are disposed with a spacing therebetween in the Z direction on an outer peripheral surface of each of spool valves 41 to 43. It should be noted that, in Fig. 2, for simplification, only some of spool seals 40b are designated by the reference numeral.

Actuator 50 includes a drive portion 51, and a main body portion 52 that controls drive portion 51. In actuator 50, drive portion 51 and main body portion 52 are integrally provided.

Drive portion 51 has a rod 51a, a rod 51b, and a rod 51c. Main body portion 52 may include a motor that drives rods 51a to 51c, and a circuit substrate that outputs a control signal to the motor.

Drive portion 51 has a holding portion 51d, a holding portion 51e, and a holding portion 51f. Holding portion 51d holds rod 51a at a position above rod 51a. Holding portion 51e holds rod 51b at a position above rod 51b. Holding portion 51f holds rod 51c at a position above rod 51c.

A base seal 51g is provided at an end portion on the Z2 side of each of holding portions 51d, 51e, and 51f.

Rod 51a is inserted into spool valve 41 from the Z1 side of spool valve 41. The position of spool valve 41 in the Z direction is changed by rod 51a.

Rod 51b is inserted into spool valve 42 from the Z1 side of spool valve 42. The position of spool valve 42 in the Z direction is changed by rod 51b.

Rod 51c is inserted into spool valve 43 from the Z1 side of spool valve 43. The position of spool valve 43 in the Z direction is changed by rod 51c.

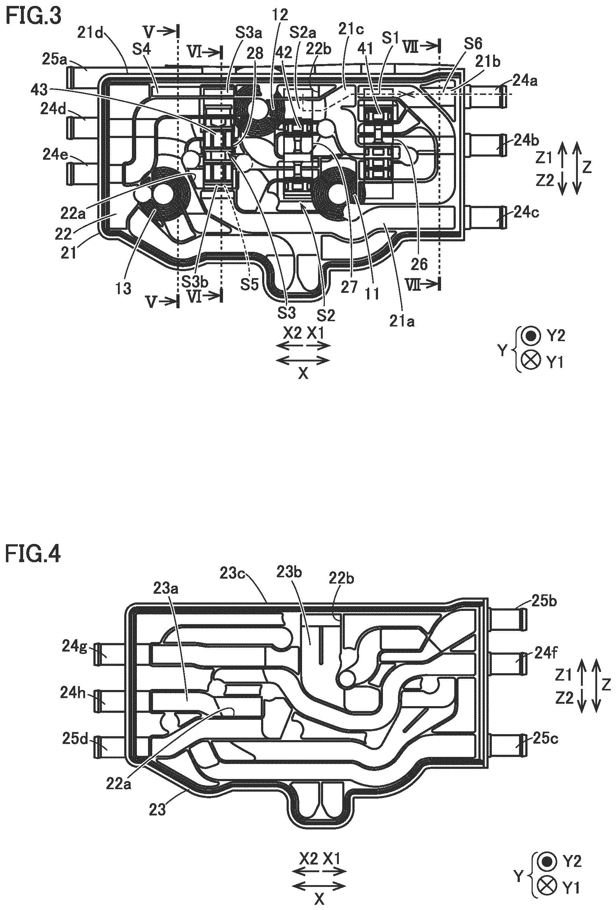

Fig. 3 is a front view showing the inside of body 21.

Inlet ports 24 (Fig. 1) provided to body 21 include ports 24a, 24b, 24c, 24d, and 24e. Outlet port 25 (Fig. 1) connected to body 21 includes a port 25a.

Spool valves 41 to 43 are respectively accommodated in spaces S1 to S3 within case 20. Specifically, spool valves 41, 42, and 43 are respectively disposed in surrounding portions 26, 27, and 28 formed in body 21. Surrounding portion 26 surrounding spool valve 41 allows spool valve 41 to move along the axial direction in space S1 within surrounding portion 26. Surrounding portion 27 surrounding spool valve 42 allows spool valve 42 to move along the axial direction in space S2 within surrounding portion 27. Surrounding portion 28 surrounding spool valve 43 allows spool valve 43 to move along the axial direction in space S3 within surrounding portion 28. Each of surrounding portions 26 to 28 is connected to a flow path formed in case 20. It should be noted that each of spaces S1 to S3 is an example of the "first space" in the present disclosure.

Each spool seal 40b (Fig. 2) and each base seal 51g (Fig. 2) are in close contact with an inner peripheral surface of each of surrounding portions 26 to 28. Each spool seal 40b can slide in the axial direction with respect to the inner peripheral surface, together with each of spool valves 41 to 43, while being in close contact with the inner peripheral surface of each of surrounding portions 26 to 28.

Spaces S4, S5, and S6 are formed within body 21. Space S4 communicates with space S3. Space S5 communicates with space S3. Space S6 communicates with space S2. It should be noted that space S4 is an example of the "second space" and the "restriction space" in the present disclosure. Further, each of space S5 and space S6 is an example of the "second space" and the "merging space" in the present disclosure.

Space S4 communicates with a space S3a on an upper end portion side of space S3. Space S4 extends from space 3a toward an X2 side. It should be noted that the heat medium flowing through the inside of spool valve 43 flows into space 3a.

Space S4 is a restriction space in which outflow of the heat medium is restricted. That is, the restriction space means a space in which a flow path (an inlet, an outlet) through which the heat medium can flow is not formed, except for an inlet through which the heat medium flows thereinto. In other words, the restriction space is a space in which a dead end is formed in a channel through which the heat medium flows.

Space S5 communicates with a space S3b on a lower end portion side of space S3. It should be noted that space S3b communicates with a flow path 21a formed within body 21. The heat medium flowing from port 24c flows through flow path 21a. Further, the heat medium flows into space S5 from a space on a cover 23 (Fig. 1) side, through an opening 22a formed in gasket 22. That is, in space S5, the heat medium flowing through flow path 21a and the heat medium from opening 22a merge.

Space S6 communicates with a space S2a on the upper end portion side of space S2. Space S6 is a space within a flow path 21b formed in body 21. Flow path 21b is connected to port 24a, and the heat medium flowing from port 24a flows therethrough. Further, space S2a communicates with a flow path 21c formed within body 21. Flow path 21c communicates with flow path 21b. That is, in space S6, the heat medium flowing through flow path 21b and the heat medium flowing through flow path 21c merge. It should be noted that, in Fig. 2, the heat media that merge in space S6 (flow path 21b) are indicated by dash-dotted arrows.

The heat medium flows into flow path 21c from a space on the cover 23 (Fig. 1) side, through an opening 22b formed in gasket 22.

Fig. 4 is a front view showing the inside of cover 23.

Inlet ports 24 (Fig. 1) connected to cover 23 include ports 24f, 24g, and 24h. Outlet ports 25 (Fig. 1) connected to cover 23 include ports 25b, 25c, and 25d.

Flow path 23a and a flow path 23b are formed in cover 23. The heat medium flowing from port 24h flows through flow path 23a. The heat medium flowing through flow path 23a flows out to a space on a body 21 side, through opening 22a. That is, in space S5 (Fig. 3), the heat medium flowing through flow path 23a and the heat medium flowing through flow path 21a (Fig. 3) merge.

The heat medium flowing through flow path 23b flows out to a space on the body 21 side, through opening 22b. That is, in space S6 (Fig. 3), the heat medium flowing through flow path 23b and the heat medium flowing through flow path 21b (Fig. 3) merge.

Fig. 5 is a schematic cross sectional view taken along a line V-V in Fig. 3.

Here, in a conventional configuration, it is conceivable to provide an air vent valve on a thermal circuit in order to vent air accumulated in a heat medium. In this case, a component such as a connector for connecting an air vent valve on a flow path of the thermal circuit is required, which may increase the number of components of the thermal circuit and complicate (and/or increase the size of) the configuration of the thermal circuit.

Accordingly, in the present embodiment, air vent valve 33 is inserted into space S4, as shown in Fig. 5.

Thereby, since air vent valve 33 is provided to switching device 100, there is no need to provide the air vent valve on the circuit (thermal management circuit) connected to switching device 100. As a result, the necessity of providing a component such as a connector for connecting the air vent valve on the circuit is reduced, and thus it is possible to simplify the configuration of the circuit and suppress an increase in the size of the circuit.

Further, the air is likely to accumulate in the heat medium within space S4, which is a restriction space in which flow of the heat medium is restricted. Accordingly, by inserting air vent valve 33 into space S4 as the restriction space, the air can be efficiently vented from the heat medium.

Body 21 includes an upper surface 21d and a partition wall 21e. Cover 23 includes an upper surface 23c. Upper surface 23c of cover 23 and upper surface 21d of body 21 constitute an upper surface 20a of case 20. Upper surface 20a is disposed at an upper end portion of case 20. Upper surface 20a (upper surface 21d) covers each spool valve 40 from above. It should be noted that upper surface 20a is an example of the "first surface" in the present disclosure.

Main body portion 52 of actuator 50 is disposed along upper surface 20a of case 20. Main body portion 52 may be in contact with upper surface 20a.

Therefore, air vent valve 33 penetrates side surface 210 different from upper surface 20a provided at a position facing main body portion 52, and is inserted into space S4. Specifically, side surface 210 intersects with upper surface 20a.

Thereby, it is possible to suppress interference between air vent valve 33 and main body portion 52, when compared with a case where air vent valve 33 and main body portion 52 are provided along the same surface. As a result, an operator for maintenance of switching device 100 and the like can easily access each of air vent valve 33 and main body portion 52.

Space S4 is formed at a position along upper surface 20a of case 20. Here, since the air is likely to move upward, the air is likely to accumulate in space S4 formed at a position along upper surface 20a of case 20. Therefore, by inserting air vent valve 33 into space S4, the air can be efficiently vented by air vent valve 33.

Space S4 is formed by body 21 and gasket 22. Specifically, space S4 is a space surrounded by upper surface 21d of body 21, partition wall 21e of body 21, gasket 22, and side surface 210 of body 21. It should be noted that space S4 may not be adjacent to gasket 22.

Fig. 6 is a cross sectional view taken along a line VI-VI in Fig. 3. Space S5 is adjacent to space S3b on the Y1 side of space S3b. For example, as shown in Fig. 6, space S5 may be provided by forming a recess in side surface 210 of body 21.

In a state where opening 22a is not closed by the outer peripheral surface of spool valve 43, the heat medium flowing through flow path 23a and the heat medium flowing through flow path 21a merge in space S5.

Here, the air is likely to accumulate in the heat media in a space in which the heat media merge. Accordingly, by inserting air vent valve 32 into space S5 in which the heat media merge, the air can be efficiently vented from the heat media.

Air vent valve 32 is inserted into space S5. As with air vent valve 33, air vent valve 32 penetrates side surface 210 of body 21.

As shown in Fig. 6, a flow path 21h that allows communication between flow path 23a of cover 23 and space S3 is formed in body 21. Fig. 6 shows a state where flow path 21h is closed by the outer peripheral surface of spool valve 43 when spool valve 43 moves downward (see a dash-dotted line). Thereby, the heat medium in flow path 23a does not flow into space S3 on the body 21 side. This is an example of switching of the flow channels of the heat medium by spool valve 40.

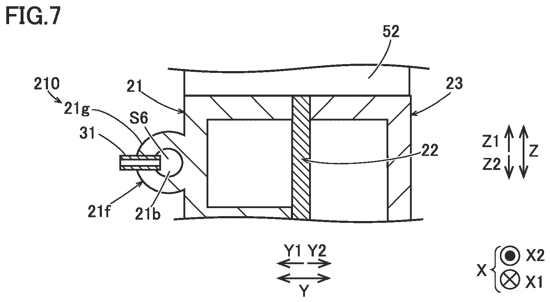

Fig. 7 is a cross sectional view taken along a line VII-VII in Fig. 3. Flow path 21b is formed by a flow path forming portion 21f. Flow path forming portion 21f has a cylindrical shape extending in the X direction. A side surface 21g of flow path forming portion 21f is a part of side surface 210 of body 21.

Air vent valve 31 is inserted into space S6. Air vent valve 31 penetrates side surface 21g of flow path forming portion 21f.

Thereby, since air vent valve 31 is inserted into space S6 in which the heat media merge, the air can be efficiently vented from the heat media.

It should be noted that the insertion position of air vent valve 31 (32) shown in Figs. 6 and 7 is merely an example, and the present disclosure is not limited to this example. The air vent valve may be inserted into another space in which the air is likely to accumulate within case 20.

As described above, in the present embodiment, air vent valve 33 is inserted into space S4. Thereby, the air accumulated in space S4 communicating with space S3 in which spool valve 43 is accommodated can be vented by air vent valve 33. As a result, it is possible to suppress the air from being included in the heat medium passing through spool valve 43. Thereby, the necessity of providing an air vent valve to the thermal management circuit or the like connected to switching device 100 is reduced, and thus it is possible to simplify the configuration of the thermal management circuit or the like. It should be noted that air vent valves 31 and 32 also exhibit the same effect.

Further, air vent valve 33 (32) is inserted into space S4 (S5) communicating with space S3, and air vent valve 31 is inserted into space S6 communicating with space S2. Thereby, air venting from different spaces can be performed using separate air vent valves. As a result, the efficiency of air venting can be increased, when compared with a case where air venting from a plurality of spaces is performed using a common air vent valve.

Further, space S4 communicates with space S3a on the upper end portion side (the end portion side on the Z1 side) of space S3. Space S6 communicates with space S2a on the upper end portion side (the end portion side on the Z1 side) of space S2. Thereby, the air that is likely to move upward can be efficiently discharged by air vent valves 33 and 31.

Although the above embodiment has described an example in which there are provided air vent valve 33 inserted into space S4 as the restriction space and air vent valve 32 (31) inserted into space S5 (S6) as the merging space in which the heat media merge, the present disclosure is not limited thereto. Only one of the air vent valve for the restriction space and the air vent valve for the merging space may be provided.

Although the above embodiment has described an example in which upper surface 20a adjacent to main body portion 52 of actuator 50 and side surface 210 into which air vent valves 31 to 33 are inserted are different surfaces of case 20, the present disclosure is not limited thereto. For example, any of air vent valves 31 to 33 may penetrate upper surface 20a and be inserted into case 20.

Although the above embodiment has described an example in which spool valve 40 is accommodated in case 20, the present disclosure is not limited thereto. A rotary valve may be accommodated in case 20.

Although the above embodiment has described an example in which an air vent valve is not inserted into a space communicating with space S1 in which spool valve 41 is accommodated, the present disclosure is not limited thereto. An air vent valve may be inserted into the space communicating with space S1.

Although the above embodiment has described an example in which air vent valve 33 is inserted into space S4 extending along upper surface 20a of case 20, the present disclosure is not limited thereto. The air vent valve may be inserted into a space extending along the side surface or a lower surface of the case.

It should be noted that the configurations of the above embodiment and the above various modifications may be combined with each other.

Although the embodiment of the present disclosure has been described, it should be understood that the embodiment disclosed herein is illustrative and non-restrictive in every respect. The scope of the present disclosure is defined by the scope of the claims, and is intended to include any modifications within the scope and meaning equivalent to the scope of the claims.

## Claims

1. A switching device (100) comprising:
a switching valve (40, 41, 42, 43) configured to switche flow channels of a heat medium;
a case (20) that accommodates the switching valve (40, 41, 42, 43); and
an air vent valve (30, 31, 32, 33), wherein
the case (20) has a first space (S1, S2, S3) and a second space (S4, S5, S6) formed therein, the switching valve (40, 41, 42, 43) being accommodated in the first space (S1, S2, S3), the second space (S4, S5, S6) communicating with the first space (S1, S2, S3), and
the air vent valve (30, 31, 32, 33) is inserted into the second space (S4, S5, S6).

2. The switching device according to claim 1, wherein
the second space (S4, S5, S6) includes a restriction space (S4) in which outflow of the heat medium is restricted, and
the air vent valve (30, 31, 32, 33) includes a restriction space valve (33) inserted into the restriction space.

3. The switching device according to claim 1 or 2, wherein
the second space (S4, S5, S6) includes a merging space (S5, S6) in which the heat media flowing through a plurality of flow paths (21a, 21b, 21c, 23a and 23b) formed within the case (20) merge, and
the air vent valve (30, 31, 32, 33) includes a merging space valve (31, 32) inserted into the merging space (S5, S6).

4. The switching device according to any of claims 1 to 3, further comprising an actuator (50) configured to drive the switching valve (40, 41, 42, 43), wherein
the case (20) includes
a first surface (20a), and
a second surface (210) different from the first surface (20a),
the actuator (50) includes a main body portion (52) disposed along the first surface (20a), and
the air vent valve (30, 31, 32, 33) penetrates the second surface (210) and is inserted into the second space (S4, S5, S6).

5. The switching device according to any of claims 1 to 4, wherein
the switching valve (40, 41, 42, 43) includes a spool valve (40, 41, 42, 43) extending in an up-down direction, and
the second space (S4, S5, S6) communicates with a space (S2a, S3a) on an upper end portion side of the first space (S1, S2, S3).

6. The switching device according to claim 5, wherein
the case (20) includes an upper surface (20a) covering the switching valve (40, 41, 42, 43) from above, and
the second space (S4, S5, S6) is formed at a position along the upper surface (20a).

7. The switching device according to any of claims 1 to 6, wherein
the switching valve (40, 41, 42, 43) includes a first switching valve (43) and a second switching valve (42) different from the first switching valve (43),
the air vent valve (30, 31, 32, 33) includes a first air vent valve (32, 33) and a second air vent valve (31) different from the first air vent valve (32, 33),
the first air vent valve (32, 33) is inserted into the second space (S4, S5) communicating with the first space (S3) in which the first switching valve (43) is accommodated, and
the second air vent valve (31) is inserted into the second space (S6) communicating with the first space (S2) in which the second switching valve (42) is accommodated.
